# EUROPEAN PATENT APPLICATION

(11) **EP 2 869 301 A1**
(43) Date of publication of application: **06.05.2015**
(21) Application number: 14189886.6
(22) Date of filing: 22.10.2014
(51) Int. Cl.: G11B 27/00, G11B 27/034, G11B 27/036

(54) **Method and apparatus for preparing video assets for processing**

(30) Priority: 05.11.2013 EP 13306520
(71) Applicant: Thomson Licensing, 92130 Issy-les-Moulineaux (FR)
(72) Inventor: Arrighetti, Walter, 30625 Hannover (DE)
(74) Representative: Schmidt-Uhlig, Thomas

(57) **Abstract**

A method and an apparatus for preparing video assets comprising frames for processing are described. Via an input (21) a list of video assets required for processing is retrieved (10). A source locator (23) determines (11) source locations of the required video assets on one or more data archives. A data handling unit (26) then makes (12) the required video assets and supplemental video assets or supplemental parts of video assets available on a fast shared file system.

## Description

### FIELD OF THE INVENTION

The invention relates to a method and an apparatus for preparing video assets for processing. In particular, the invention relates to a method and an apparatus for preparing a selection of video assets during a pre-conforming phase for postproduction.

### BACKGROUND OF THE INVENTION

Any moving picture content that is shot from live scenes, at least partially, and uses several takes, needs to be edited a few times in order to produce a video clip, i.e. a one-dimensional consecution of video frames versus time. The resulting timeline is not necessarily the final one, the so-called final cut of a project. In any case, in general timelines are generated using only a subset of the frames from all the available frames that have been shot, usually by several different cameras and with changing conditions.

In modern non-linear editing (NLE) systems the timeline is described by a metadata list of the consecution of the different clips, and the 'in' and 'out' frame numbers for each of those clips. Very often not all the frames in a clip are used in the video clip, for either creative and technical reasons, e.g. in order to remove the sync slates from the beginning of the scene.

Furthermore, many video effects, such as dissolves and wipes between clips, need frames from two or more different clips to be presented, partially or completely, in the same video clip at the same time. Therefore, a timeline often includes original frames from several clips used simultaneously to compose a single frame of the video clip.

The frame numbers used to address the original frames in the clips in the timeline constitute metadata, and are typically counted in units of a TimeCode at a given film speed 'n'. An example would be a frame 01:23:36.54, which describes the frame occurring at 1 hour, 23 minutes, 36 seconds, 54 frames, at n frames per second. Other ways to reference such assets are to directly use frame numbers or to use KeyKodes as developed by Kodak. While the use of frame numbers is particularly useful when the digital video is stored as a numbered file sequence, which is a very common situation in professional video post-production, where each file represents a frame, the KeyKodes are typically encountered when it comes to the traditional 16/35mm photochemical film.

The list of 'in' and 'out' points for the clips composing a video asset, including video- and audio-effect information, like dissolves/wipes, resize, time-lapse, etc., is usually called an Edit-Decision List (EDL). This is also the common name of the ASCII-text file format that is used to distribute Edit-Decision Lists among production and post-production houses worldwide.

A problem with this approach is that the reference point for the TimeCodes is not necessarily unique among all the shots/clips and throughout the whole project. In other words, not every clip or shot has one universal starting TimeCode of 00:00:00.01 or a frame number 0 as a reference point. Among others, reasons for this are:
- Different cameras may simultaneously shoot the same scene, or different scenes but at the same time.
- Using a 'maximum' theoretical TimeCode of 99:59:59.... would soon fill up every digital storage system, considering the average length of all the shot footage of any low/medium-end video project.
- As media are at least partially human-handled, one cannot rely on a TimeCode-only or frame-number-only differentiation of all the asset clips.
- Using a 'Time-of-Day' TimeCode corresponding to an internal world clock cannot account for projects being shot across different days.
- Not all the clips composing a video project may come from sources referenced to by a TimeCode, e.g. Computer Graphics footage, un-indexed archival footage, still backgrounds/slates, etc.

For this reason additional metadata are used, like tape or magazine names, shooting date, shooting location, unique camera names or symbols, etc. Traditionally, those metadata were usually written on a paper log accompanying every physical device with the shot video content. Such logs are known as dailies. With more and more digital systems, most of those information, particularly TimeCodes, frame numbers, tape or camera names, shooting date or time, can be automatically recorded by the cameras themselves onto the original digital footage, similar to a sort of signature for every frame. Some cameras even use UUIDs (Universally Unique Identifier) for every frame.

The phase where a post-production facility re-assembles the high-resolution footage composing a timeline according to the editorial metadata, i.e. the EDL provided by offline or production editors, is called conforming or 'online editorial'.

The ratio between shot footage and the footage that is actually used in the final edit of the project, albeit hugely varying due to many objective and subjective factors, is very large. A lot of digital assets are 'wasted', i.e. actually not used, but still need to be recorded on some digital storage at least until the final editorial is done. Storage of video files causes ongoing costs, which depends on their size in gigabytes or even terabytes. For post-production facilities, as well as for archival services like Content Delivery Networks (CDN), it is of paramount importance to employ the most efficient and clever ways to store all this footage.

Post-production facilities, in particular, use expensive, high-performance shared file systems to store digital footage during the processing of an audio-visual project, usually in the form of a Storage Area Network (SAN). In this ways post-production bays, e.g. editorial, color correctors, VFX and finishing workstations, etc., can work simultaneously and in real-time on the video assets. As this type of storage is the most expensive one (per gigabyte), economizing on it is desirable.

Another huge cost impact stems from the time needed for data ingestion into these file systems and data retrieval from these file systems. As video assets for a typical full-feature movie may easily span tens to hundreds of terabytes of uncompressed material, the time needed for file copy operations causes huge delays.

Similar problems are encountered for Video-on-Demand (VoD) services, where the processes for retrieving a subset of specific frame intervals from a restricted, specifically selected set of clips from a huge archive are often highly inefficient.

### SUMMARY OF THE INVENTION

It is an object of the present invention to propose an improved solution for preparing video frames for processing.

According to the invention, a method for preparing video assets comprising frames for processing comprises the steps of:
- retrieving a list of video assets required for processing;
- determining source locations of the required video assets on one or more data archives; and
- making the required video assets and supplemental video assets or supplemental parts of video assets available on a fast shared file system.

Accordingly, an apparatus configured to prepare video assets comprising frames for processing comprises:
- an input configured to retrieve a list of video assets required for processing;
- a source locator configured to determine source locations of the required video assets on one or more data archives; and
- a data handling unit configured to make the required video assets and supplemental video assets or supplemental parts of video assets available on a fast shared file system.

Also, a computer readable storage medium has stored therein instructions enabling preparing video assets comprising frames for processing, which when executed by a computer, cause the computer to:
- retrieve a list of video assets required for processing;
- determine source locations of the required video assets on one or more data archives; and
- make the required video assets and supplemental video assets or supplemental parts of video assets available on a fast shared file system.

The solution according to the present invention consists in a process for transferring a subset of all the shot footage that is originally present in a huge but slow offline storage into a smaller, but fast and shared online storage. The process is preferably implemented as a software tool. Such a tool does not require any relevant computational capabilities, nor are there any particular hardware, software, or graphics requirements. The proposed approach thus provides an inexpensive solution for addressing both data transfer operations and storage occupation by just including in a facility's storage the clips needed for the final cuts of a project. The occupation of video assets in the expensive online storage is thus greatly reduced. At the same time the file transfer is transparent, as it is carried out in the background by non-dedicated hardware and software. This increases the overall efficiency of video retention and online editing workflows.

The selection which video frames to transfer is made according to the metadata present in some sort of EDL, both for the conforming, post-production phase of a video content as well as for VoD applications. The proposed transfer constitutes a kind of pre-conforming phase, i.e. it is used after the creative ('offline') editorial phase, but before the technical ('online') editorial phase.

During the pre-conforming phase a variety of steps are advantageously performed:
- An EDL is read or parsed, i.e. TimeCode-based of frame-based video-editorial metadata are evaluated. These may come in a variety of file formats, e.g. EDLs, ALE files, Final Cut projects, XML files, etc.
- Specific storage paths are scanned for digital assets and searched for their editorial-based metadata, such as pathnames, clip/tape/reel names, 'in' and 'out' TimeCodes or frame numbers, etc.
- The EDL metadata is matched with the metadata from the assets to find just the relevant clips and/or frames.
- A virtual timeline is assembled with the right time consecution of the segmented clips. In case special effects across clips are needed, it is preferably assembled on several video layers.

Examples of the offline storage are hard disk drives, digital archival tapes, or Content Delivery Networks (CDN). The online storage advantageously includes fast RAID arrays, Network Attached Storage (NAS), Storage Area Networks (SAN), or smaller Content Delivery Networks (CDN). Note that CDNs can be either source or destination of this solution, as the CDN may be the storage for either the video's source and target clips. If a CDN is the target of the transfer, this is likely to a VoD application requiring an edited video sequence to be later delivered, e.g. streamed, to an end-user device. This video sequence may be customized per-user and/or per-request, so it needs to be pre-conformed according to an EDL which has been manually or automatically generated, e.g. for including advertising, head or tail leaders with the description of the service, carriers' or ISP logos, etc. In the case CDNs are the source of the transfer, the proposed solution is equally advantageous, as the target storage at the end-user's device is likely to be smaller in size. Besides, the user should be provided only with the footage that has been requested and/or licensed and paid for, not more.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: depicts a method according to the invention;
- Fig. 2: schematically illustrates an apparatus configured to perform a method according to the invention;
- Fig. 3: shows a screenshot of a software tool implementing a method according to the invention; and
- Fig. 4: depicts a screenshot showing various options of the software tool.

### DETAILED DESCRIPTION OF PREFERED EMBODIMENTS

In the following the invention shall be described for the case in which the footage to be matched and later on copied is indexed according to movie-industry related metadata. As described above, such metadata comprise, among others, tape and clip names and TimeCodes. In any case, the solution described below does not need to be modified significantly in case of Edit-Decision List generated by Video-on-Demand or Pay-per-View systems.

A typical Edit-Decision List is a list of events where the 'in' and 'out' TimeCodes of a source element, referred to and also distinguished via a tape or clip name, are listed on one side and later on compared with the 'in' and 'out' TimeCodes of the virtual timeline those frames are associated to. If the Edit-Decision List is given, for example, in the established CMX 3600 universal format, four consecutive events of the list would be written in a .EDL file as follows:

**Table 1: Exemplary Edit-Decision List**

| Event | Source name | IN TimeCode of source | OUT TimeCode of source | IN TimeCode on timeline | OUT TimeCode on timeline |
|---|---|---|---|---|---|
| 005 | TAPE_008 | 04:18:37:16 | 04:18:40:16 | 03:00:23:12 | 03:00:26:12 |
| 006 | TAPE_017 | 04:35:05:09 | 04:35:11:15 | 03:00:26:12 | 03:00:32:18 |
| 007 | TAPE_008 | 04:18:48:02 | 04:19:09:16 | 03:00:32:18 | 03:00:54:07 |
| 008 | TAPE_017 | 04:35:32:10 | 04:35:35:19 | 03:00:54:07 | 03:00:57:16 |

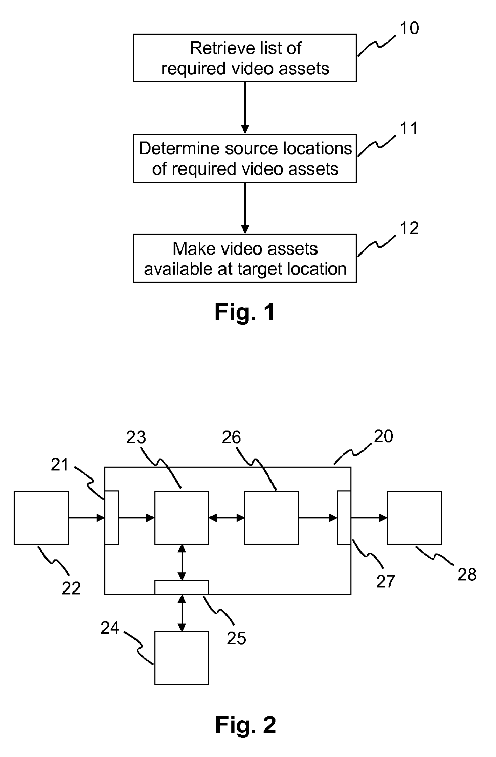

Fig. 1 schematically illustrates a method according to the invention for preparing video assets comprising frames for processing. In a retrieving step 10 a list of video assets required for processing is obtained, e.g. from a network or a local storage. Then source locations of the required video assets on one or more data archives are determined 11. In a subsequent data handling step 12 the required video assets and supplemental video assets or supplemental parts of video assets are made available on a fast shared file system, e.g. by copying or moving the video assets from the source locations to the shared file system.

An apparatus 20 configured to perform the method according to the invention is schematically depicted in Fig. 2. The apparatus 20 has an input 21 for retrieving 10 a list of video assets required for processing, e.g. from a network or a local storage 22. A source locator 23 determines 11 source locations of the required video assets on a source data archive 24, which is connected to the apparatus 20 via a data interface 25. Based on the determined source locations a data handling unit 26 makes 12 the required video assets and supplemental video assets or supplemental parts of video assets available on a fast shared file system. For this purpose the apparatus 20 has an output 27 for providing the video assets to a target storage system 28. Of course, the different units 23, 26 may likewise be fully or partially combined into a single unit or implemented as software running on a processor. In addition, the input 21, the output 27, and the data interface 25 may likewise be combined or partially combined into a single bidirectional interface.

For simplicity the invention has been implemented as a tool in the form of a command-line binary callable from Windows, Linux and MacOS operating systems, which has just three compulsory arguments:
1. A source path indicating where the source footage is mounted. The source path usually designates a root of a huge, but slow file system, e.g. using /mnt, or a tape drive or storage vault or library, e.g. using /dev/st0, containing many tapes whose barcode codifies one or more tape names.
2. A target path indicating where the clips used in the video project described by the Edit-Decision List need to be transferred. The target path usually designates a smaller, but faster shared storage, like a SAN or a NAS, e.g. using a /share folder.
3. The pathname of an EDL file. For example, the EDL file may be a CMX3600 EDL, an ALE file, a FinalCut project or XML file, as well as a VoD or Digital Cinema composition playlist.

If the source path is a tape drive or storage vault or library, algorithms for automatic tape retrieval from the storage vault according to barcode as well as tape retensioning, fast-forwarding and rewinding to the exact media location are executed. The necessary information is generally specified in a global database of frames for all the tapes, i.e. for the entire storage vault. This is a common solution for multimedia CDNs.

If the source footage is digitally stored in a single video file per clip, which, for example, is the case for QuickTime (.mov), MXF (.mfx), MPEG4, or REDCODE (.R3D) footage, just the clips specified in the second column are tagged and then transferred from source to target path.

The proposed tool is preferably interfaced with automatic video segmentation applications, which extract only relevant frames from the video file and re-encode them in the target path. This may include several CPU or GPU intensive operations, above all for inter-frame compression video formats, which require transcoding of a compressed video stream.

If the footage clips are stored as file-per-frame sequences, which is the case for most professional digital video cameras, the retrieval is much more selective and space- and time-efficient, as only the relevant frames will be processed. This is the case for DPX (.dpx), Alexa camera's ARRIRAW (.ari), TIFF (.tif, .tiff), OpenEXR (.exr), ACES (.aces), Adobe DNG and CinemaDNG(.dng) file sequences, for example.

Since different tapes can have the same TimeCode, the tool uses a multiple-lookup algorithm to match the TimeCodes of the relevant clips that match the source name. Then TimeCode computations are performed, since a specific clip usually accommodates footage with a wider TimeCode range than the one actually used in the Edit-Decision List. For example, looking at event 005 in the above Table 1, footage from the clip called 'TAPE_017' is needed. It is likely that this clip contains frames chronologically placed before the 'in' TimeCode 04:18:37.16, as well as after the 'out' TimeCode 04:18:40.16. These frames include slates, pre-shot focusing tests, exposure tests, as well as actors' preparation, etc. Therefore, the algorithm compares the 'in' and 'out' TimeCodes of the required clips with the ones physically present in the clip and operates such that only the relevant ones are processed and transferred. Of course, not all file formats require or even have TimeCodes included in the associated metadata. Depending on the file format to retrieve, or responsive to a user request, TimeCodes are calculated for the video assets. For example, TimeCodes may be deduced from the frame numbers in a frame-per-file sequence of frames. Consider a sequence of DPX files named file00024, file00025, file00026, etc. These files do not have TimeCodes in their metadata. However, assuming that they were generated at 24 frames per second, frame #0 would correspond to file00000, frame #1 to file00001, etc. Therefore, the sequence starts at 00:00:01.00 with file00024.

In the case of a pre-conforming phase during a post-production work, the clips in the Edit-Decision List will typically need an additional real conforming and/or finishing step. During this step an editor, artist, or operator adds relevant video effects to the Timeline, e.g. using editing or finishing software with a graphical user interface, and visually inspects the edited timeline with a video reference to detect errors, mismatches or out-of-sync's on the Edit-Decision List. This includes adding transitions, wipes, frame resizing or reframing, time lapses or reversals, etc. In this phase it may become necessary to 'slip' or 'trim' the original footage by a minimum amount of frames, either backwards or forwards. For this reason the proposed tool is aware of frame handles needed before and after each source clip, usually 1 to 25 additional frames per clip end, that are also copied to cope with fine or coarse further syncing of audio and/or video.

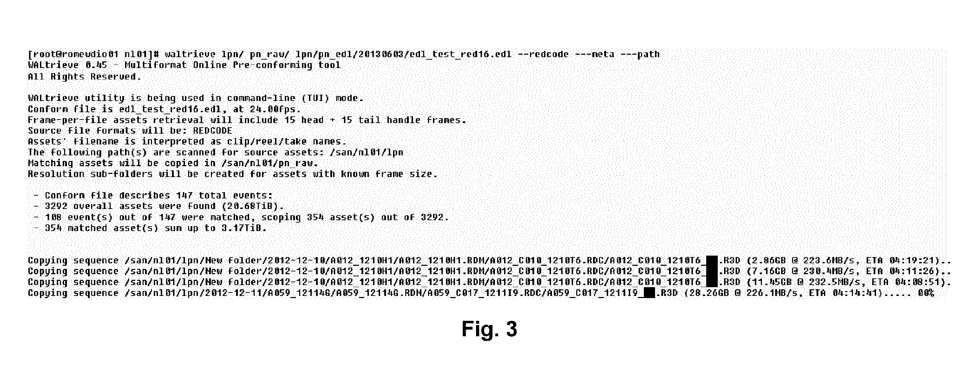

Fig. 3 shows a first screenshot of the above described tool. The tool is called WALtrieve, the version in the screenshot is 0.45. The first few lines describe what the tool will actually do based upon the user's command-line input, which is the first top line. They will be briefly explained one by one in the following, from top to bottom:
- The EDL file "edl_test_red16.edl" is considered to have TimeCodes treated as running at 24 frames/second. Via a command-line argument the user may specify a different frame rate.
- 15 head and tail 'handle frames' will be added to the clips so that, in case the editor will later need to adjust the clips by sliding them slightly forward or backwards in the timeline with respect to the information provided in the EDL, he can actually do so because a few additional frames are copied as well to allow room for this manipulation.
- In this example a specific gathering of video files in the proprietary format "REDCODE" (used by RED Digital Cinema Camera Company cameras) was asked for. If no format is specified, clips of any of the supported file formats are gathered.
- The tool also informs that the name of the clips will be inferred (via a simple algorithm in the code) from the video files' filename in cases where no clip name is present in the metadata. This might happen, for example, with DPX and some other formats.
- The tool informs about the source path "/source/path", which in this case is a link to a Networked File System on a different, slower computer.
- The tool informs about the target path where the matching assets will be copied to. In this case this is a full path in a highly-available and high-speed Storage Area Network "/target/path". In general, the tool is able to make available the assets across storage systems with different physical and/or logical properties, such as size, speed/throughput, redundancy, connectivity, file systems, etc., including networked, hierarchical and cloud storage.
- The last line warns that, in case assets with different resolutions are found, those will be placed in sub-folders, each for the specific assets' resolution. For example, such folder would be /target/path/4096x2160 and /target/path/1920x1080). Of course, other types of sub-folders may likewise be generated, e.g. based on the day of the original shot, the name of the camera type, the specific encoding camera color-space, etc.

Up to this point no file system path has been processed yet. Now the actual preparation of video assets begins.
- First of all the EDL is parsed and 147 "events" are acknowledged, i.e. the video composition has actually 147 cuts.
- Then the source path is parsed searching for REDCODE clips. 3292 clips are found, each containing a slate-to-slate video sequence as captured on set. The total of these sequences amounts to 20.68 TeraBytes.
- Of the 147 events needed by the composition (EDL), 108 events were found in the source path. This means that not the complete movie footage is contained in the specified source path. The tool thus needs to be re-run on a different network volume to retrieve the remaining footage. Sometimes the assets are recovered from common external consumer drives. Those hard disks are typically small, i.e. less than 4 TeraBytes and come straight from the production set. The production has likely done a double or triple security copy before shipping the drive. Of course, not all of them can be mounted at the same time. For Linux or Mac systems, where all the external drives are mounted as subfolders of a master folder, it is possible to plug as many of the drives as possible on a single machine and then use that "master path" as single source. In this way all the drives will be ultimately processed sequentially.
- The tool warns that 354 files out of the 3292 clips, making up the 108 events that matched, will be copied from the repository to the target path, and that this is expected to consume 3.17 TeraBytes of storage space on the target path. As can be seen, the number of files is larger than the number of matching events. The REDCODE file formats saves a video clip shot from the camera on a single video file with .R3D extension. However, in order to keep the highest possible compatibility with different file system types across different operating systems (FAT32, NTFS, Linux, Mac/HFS, etc.), a single file should not be greater than 4GB in size. Therefore, if the recorded video clip is too long the RED digital camera finalizes one file (_001.R3D extension) and immediately goes on writing the continuous video with a second one (_002.R3D). In this way multiple 4GB chunks, or 2GB chunks with older RED ONE models, are recorded. This ultimately means that each single clip referenced by one 'event' of the EDL might be distributed over multiple files.

From now on the tool is just a file-copy tool and shows the copy progress while it proceeds. The source files are written one after another and the tool also benchmarks the total size copied, the average transfer speed in MegaBytes/second and an estimated transfer time (ETA). In case a clip is already present at the target location, the tool can either overwrite it, e.g. in accordance with most recent file system date stamps or the file size, or simply do not initiate any file-transfer process. The latter approach assumes that the clip at the target location is valid. Skipping the file transfer of an already-existing video asset reduces the total processing time. This is an important advantage of the tool, since one will often need to re-process the same source locations several times when the director of the video assets has made new editorial decisions with regard to the movie. In such cases retransferring only the missing assets that were not retrieved the first time saves a lot of time.

In this example, from a storage containing more than 20 TeraBytes of data only 3 TeraBytes are the data that are actually used by that specific movie reel. This amount of data can be copied in a few hours, in this case about 4 hours, while saving about 85% of the space on the high-speed Storage Area Network.

The video editing tool that will subsequently do the edit from the same EDL file will take much less processing time because the working area in the high-speed Storage Area Network, i.e. the target path to which the files have been copied before, is much leaner and cleaner than the data archive in the Networked File System with thousands of folders with 10k of files taking 20TB of space.

In the above description the tool is used for source footage that is video-clip based. Of course, the tool is also applicable to source footage that is frame-per-file based. In this case the source footage is structured in folders. Each clip, considered as a continuous recording from a camera, is contained in a subfolder. It is, however, not stored in this subfolder as a single file. The subfolder naming conventions may vary from camera workflow to camera workflow, but the folder names are generally meaningful. For example, the folder names may contain part of the tape name or even the whole tape name.

To give a specific example, a clip folder name as generated by the camera at recording time might be .../.../A026C001_20130905_A8D2, where 'A' is the camera number, '026' is the 'tape' or 'magazine' number '001' is the progressive number of the clip, which means that folders originating from time-adjacent recordings in the same magazine use this number as incremental, '20130905' is the day of the shoot, and 'A8D2' is some form of checksum of the name.

In each clip folder there is a unique sequence of files, whose file names end with a progressive number with fixed digits padding, e.g. 7 to 10 digits. The file names may additionally contain parts of or even the complete name of the parent folder. For the above example the files within the folder .../.../A026C001_20130905_A8D2 might be
A026C001_20130905_A8D2.00000001.ari,
A026C001_20130905_A8D2.00000002.ari,
A026C001_20130905_A8D2.00000003.ari, and so on.

There is a one-to-one correspondence between the files and the frame numbers. This mapping can be straightforward, e.g. the first frame is numbered #1, the second frame #2, etc., or the frames might be translated to TimeCodes once the frame rate is known. However, the files generally have the TimeCode of the corresponding frame written in the file header.

When the tool processes such footage it copies the file sequences as identified by the TimeCodes in the EDL, but it also adds the handle frames at the beginning and ending of each file sequence. Usually a minimum of 5 additional frames up to 1 full additional second of footage is retrieved.

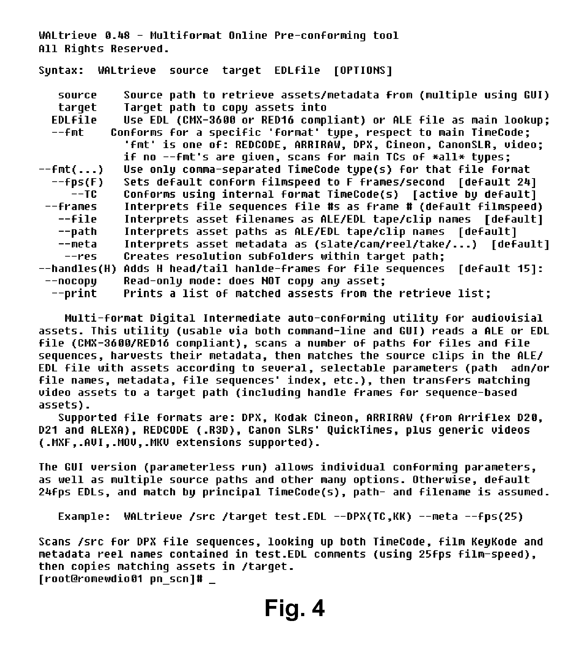

Fig. 4 is a screenshot showing some of the options that are available for the WALtrieve tool, in this case for version 0.48. In addition to an indication of the source, the target, and the list to be processed, options are available for specifying the type of files to be processed, types of TimeCodes for specific file formats, and the number of frames per second. Further options allow manipulating how file names, path names, and metadata are interpreted. As already explained before, a further option is provided for adjusting how many handle frames are made available in addition to the required clips. A "nocopy" option triggers the tool to run in read-only mode in order to determine the amount of data to be transferred as well as the time required for this transfer. Finally, a list of matched assets may be printed.

## Claims

1. A method for preparing video assets comprising frames for processing, the method comprising the steps of:
- retrieving (10) a list of video assets required for processing;
- determining (11) source locations of the required video assets on one or more data archives; and
- making (12) the required video assets and supplemental video assets or supplemental parts of video assets available on a fast shared file system.

2. The method according to claim 1, **wherein** the source locations are specified by a user or determined from a database.

3. The method according to claim 1 or 2, **wherein** for one or more of the video assets only required parts of the video assets are made (12) available on the fast shared file system.

4. The method according to claim 3, **wherein** the required parts of the video assets are obtained by extracting the required parts from the video assets.

5. The method according to one of claims 1 to 4, **wherein** time codes and/or clip names are used for determining required video assets or required parts of video assets.

6. The method according to claim 5, **wherein** time codes of one or more video assets are retrieved from metadata associated to or included in the video assets or determined from names of the video assets.

7. The method according to claim 1, **wherein** an amount of supplemental video assets or supplemental parts of video assets that are made (12) available on the fast shared file system is user settable.

8. The method according to one of the preceding claims, **wherein** only video assets of specified file types are made (12) available on the fast shared file system.

9. The method according to one of the preceding claims, **wherein** different folders are automatically generated on the fast shared file system in accordance with different properties of the video assets.

10. The method according to one of the preceding claims, **wherein** the list of video assets required for processing is a list comprising video-editorial metadata.

11. The method according to one of the preceding claims, **wherein** the video assets are video clips stored as one or more video files per clip or as file-per-frame sequences.

12. An apparatus (20) configured to prepare video assets comprising frames for processing, **wherein** the apparatus comprises:
- an input (21) configured to retrieve (10) a list of video assets required for processing;
- a source locator (23) configured to determine (11) source locations of the required video assets on one or more data archives; and
- a data handling unit (26) configured to make (12) the required video assets and supplemental video assets or supplemental parts of video assets available on a fast shared file system.

13. A computer readable storage medium having stored therein instructions enabling preparing video assets comprising frames for processing, which when executed by a computer, cause the computer to:
- retrieve (10) a list of video assets required for processing;
- determine (11) source locations of the required video assets on one or more data archives; and
- make (12) the required video assets and supplemental video assets or supplemental parts of video assets available on a fast shared file system.
